(19) Europäisches Patentamt
European Patent Office
Office européen des brevets

(11) Veröffentlichungsnummer: **0 353 574 A1**

(12) # EUROPÄISCHE PATENTANMELDUNG

(21) Anmeldenummer: **89113510.5**

(22) Anmeldetag: **22.07.89**

(51) Int. Cl.[4]: **C07F 9/165 , C07F 9/40 , A01N 57/04**

(30) Priorität: **04.08.88 DE 3826449**

(43) Veröffentlichungstag der Anmeldung:
**07.02.90 Patentblatt 90/06**

(84) Benannte Vertragsstaaten:
**AT BE CH DE ES FR GB GR IT LI NL**

(71) Anmelder: **BAYER AG**

**D-5090 Leverkusen 1 Bayerwerk(DE)**

(72) Erfinder: **Sommer, Herbert, Dr.**
**Platz 59**
**D-5630 Remscheid(DE)**
Erfinder: **Hartwig, Jürgen, Dr.**
**Franz-Esser-Strasse 44**
**D-5090 Leverkusen 3(DE)**
Erfinder: **Matthaei, Hans-Detlef, Dr.**
**Paul-Klee-Strasse 67**
**D-5090 Leverkusen 1(DE)**

(54) **S-(Halogenalkyl)-dithiophosphor-(phosphon) säureester, Verfahren zu ihrer Herstellung und ihre Verwendung als Schädlingsbekämpfungsmittel.**

(57) Die Erfindung betrifft neue S-(Halogenalkyl)-dithiophosphor(phosphon)säureester der allgemeinen Formel

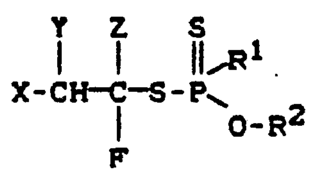

(I)

in welcher
$R^1$ für gegebenenfalls substituierte Reste aus der Reihe Alkyl, Alkenyl, Alkoxy, Alkenyloxy und Alkinyloxy (vorzugsweise Alkoxy) steht,
$R^2$ für gegebenenfalls substituierte Reste aus der Reihe Alkyl, Cycloalkyl, Alkenyl, Alkinyl oder Aryl steht und
X und Y gleich oder verschieden sind und unabhängig voneinander für Wasserstoff, Halogen oder Alkyl stehen und
Z für Wasserstoff, Halogen oder Alkyl steht,
welche als Schädlingsbekämpfungsmittel verwendet werden können.

EP 0 353 574 A1

# S-(Halogenalkyl)-dithiophosphor(phosphon)säureester, Verfahren zu ihrer Herstellung und ihre Verwendung als Schädlingsbekämpfungsmittel

Die Erfindung betrifft neue S-(Halogenalkyl)-dithiophosphor(phosphon)säureester, ein Verfahren zu ihrer Herstellung, ihre Verwendung als Schädlingsbekämpfungsmittel, insbesondere als Insektizide, Akarizide und Nematizide.

Es ist bereits bekannt, daß bestimmte Thionophosphor(phosphon)säure(amid)ester, wie zum Beispiel O-Methyl-O-(2-chlor-1-fluor-ethyl)-thionophosphorsäurediesteramid und O,O-Diethyl-O-[1,2,2,2-tetrachlorethyl)-thionophosphorsäureester pestizid wirksam sind (vgl. DE-OS 26 29 016, entsprechend US-PS 4 159 324 und EP-OS 0 160 344). Die Wirkung und die Wirkungsdauer dieser bekannten Verbindungen sind jedoch, insbesondere bei niedrigen Aufwandmengen bzw. Wirkstoffkonzentrationen, nicht immer voll zufriedenstellend.

Es wurden nun neue S-(Halogenalkyl)-dithiophosphor(phosphon)säureester der allgemeinen Formel

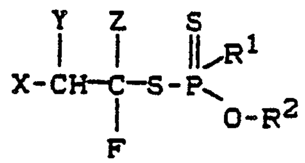

(I)

gefunden,
in welcher
$R^1$ für gegebenenfalls substituierte Reste aus der Reihe Alkyl, Alkenyl, Alkoxy, Alkenyloxy und Alkinyloxy (vorzugsweise Alkoxy) steht,
$R^2$ für gegebenenfalls substituierte Reste aus der Reihe Alkyl, Cycloalkyl, Alkenyl, Alkinyl oder Aryl steht und
X und Y gleich oder verschieden sind und unabhängig voneinander für Wasserstoff, Halogen oder Alkyl stehen und
Z für Wasserstoff, Halogen oder Alkyl steht.

Die Verbindungen der Formel (I) besitzen mindestens ein asymmetrisch substituiertes Kohlenstoffatom für den Fall, daß Z von Fluor verschieden ist und ein asymmetrisch substituiertes Phosphoratom. Sie können daher in verschiedenen optischen Isomerenformen vorliegen, die in unterschiedlichen Mengenverhältnissen anfallen können. In allen Fällen liegen sie vorwiegend als Racemate vor. Die Erfindung betrifft sowohl die Isomerengemische als auch die einzelnen Isomeren.

Weiterhin wurde gefunden, daß man die neuen S-(Halogenalkyl)-dithiophosphor(phosphon)säureester der Formel (I) erhält,
wenn man Dithiophosphor(phosphon)säuren der Formel

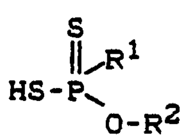

(II)

in welcher
$R^1$ und $R^2$ die oben angegebene Bedeutung haben,
mit Fluoralkenen der Formel

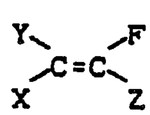

(III)

in welcher
X, Y und Z die oben angegebene Bedeutung haben,
gegebenenfalls in Gegenwart eines Verdünnungsmittels umsetzt.

Die neuen S-(Halogenalkyl)-dithiophosphor(phosphon)säureester der Formel (I) zeichnen sich in überragender Weise durch eine besonders hohe Wirksamkeit als Schädlingsbekämpfungsmittel, insbesondere als Insektizide, Akarizide und Nematizide aus.

Die erfindungsgemäßen Stoffe stellen somit eine wertvolle Bereicherung der Technik dar.

Für gegebenenfalls substituiertes Alkyl in der Definition von $R^1$ und $R^2$ und Alkyl in der Definition von X, Y und Z in den allgemeinen Formeln, steht geradkettiges oder verzweigtes Alkyl mit vorzugsweise 1 bis 20, besonders bevorzugt 1 bis 12, insbesondere 1 bis 6 und ganz besonders bevorzugt 1 bis 4 Kohlenstoffatomen. Beispielhaft sein gegebenenfalls substituiertes Methyl, Ethyl, n-Propyl, i-Propyl, n-Butyl, sec-Butyl, i-Butyl, tert-Butyl, n-Pentyl, i-Pentyl und tert-Pentyl genannt.

Für den Begriff gegebenenfalls substituiertes Alkenyl selbst oder als Bestandteil der Gruppe Alkenyloxy in den Definitionen von $R^1$ und $R^2$ in den allgemeinen Formeln steht geradkettiges oder verzweigtes Alkenyl mit vorzugsweise 2 bis 8, besonders bevorzugt 2 bis 6 und insbesondere 2 bis 4, ganz besonders bevorzugt 3 Kohlenstoffatomen. Beispielhaft seien gegebenenfalls substituiertes Vinyl, Allyl, 2-Butenyl, 3-Butenyl und 1-Methallyl genannt.

Unter dem Begriff gegebenenfalls substituiertes Alkoxy in der Definition von $R^1$ in den allgemeinen Formeln ist geradkettiges oder verzweigtes Alkoxy mit vorzugsweise 1 bis 6, insbesondere 1 bis 4 Kohlenstoffatomen zu verstehen. Beispielhaft seien gegebenenfalls substituiertes Methoxy, Ethoxy, Propoxy, Butoxy sowie ihre Isomeren, wie z. B. i-Propoxy, i-, s- und tert.-Butoxy genannt, wobei als besonders bevorzugt gegebenenfalls substituiertes Methoxy und Ethoxy aufgeführt werden.

Unter dem Begriff gegebenenfalls substituiertes Alkinyl selbst oder als Bestandteil der Gruppe Alkinyloxy in den Definitionen $R^1$ und $R^2$ in den allgemeinen Formeln ist geradkettiges oder verzweigtes Alkinyl mit vorzugsweise 2 bis 6, insbesondere 2 bis 4, besonders bevorzugt 3 Kohlenstoffatomen zu verstehen. Beispielhaft seien gegebenenfalls substituiertes Ethinyl, 2-Propinyl, 2-Butinyl, 3-Butinyl und 1-Methyl-2-propinyl genannt.

Als gegebenenfalls substituiertes Cycloalkyl in der Definition $R^2$ steht Cycloalkyl mit vorzugsweise 3 bis 8, insbesondere 3, 5 oder 6 Kohlenstoffatomen.

Beispielhaft seien gegebenenfalls substituiertes Cyclopropyl, Cyclobutyl, Cyclopentyl, Cyclohexyl und Cycloheptyl genannt.

Unter dem Begriff gegebenenfalls substituiertes Aryl in der Definition von $R^2$ in den allgemeinen Formeln ist Aryl mit vorzugsweise 6 bis 10 Kohlenstoffatomen im Arylteil zu verstehen. Beispielhaft seien gegebenenfalls substituiertes Phenyl oder Naphthyl, insbesondere Phenyl genannt.

Die in der Definition von $R^1$ und $R^2$ genannten substituierten Reste können einen oder mehrere, vorzugsweise 1 bis 3, insbesondere 1 oder 2 gleiche oder verschiedene Substituenten tragen. Als bevorzugte Substituenten für Alkyl, Alkenyl und Alkinyl seien aufgeführt:
Alkoxy mit 1 bis 4 Kohlenstoffatomen, wie Methoxy, Ethoxy, n-Propoxy, i-Propoxy, n-Butoxy, i-Butoxy, sec-Butoxy, tert-Butoxy und Halogen (Fluor, Chlor, Brom und Jod, vorzugsweise Fluor, Chlor oder Brom, insbesondere Fluor oder Chlor).

Die bevorzugten Substituenten der Reste Alkoxy, Alkenyloxy und Alkinyloxy sind die Halogene wie Fluor, Chlor, Brom und lod, insbesondere Fluor, Chlor und Brom und/oder Alkoxy mit vorzugsweise 1 bis 4 Kohlenstoffatomen, insbesondere Methoxy oder Ethoxy.

Als bevorzugte Substituenten für Cycloalkyl und Aryl seien aufgeführt:
Alkyl mit 1 bis 4 Kohlenstoffatomen,wie Methyl, Ethyl, n-Propyl, i-Propyl, n-Butyl, i-Butyl, sec-Butyl und tert-Butyl, Halogenalkyl mit vorzugsweise 1 bis 4, insbesondere 1 oder 2 Kohlenstoffatomen und vorzugsweise 1 bis 5, insbesondere 1 bis 3 Halogenatome (vorzugsweise Fluor, Chlor und/oder Brom, insbesondere Fluor und/oder Chlor, wie z.B. Trifluormethyl, und Halogen (vorzugsweise Fluor, Chlor und/oder Brom, besonders bevorzugt Fluor und/oder Chlor, ganz besonders bevorzugt Chlor).

Als Arylsubstituent kommt außerdem noch $C_1$-$C_4$-Alkoxy in Frage, wie z.B. Methoxy, Ethoxy, n-Propoxy, i-Propoxy, n-Butoxy, i-Butoxy, sec-Butoxy und tert-Butoxy.

Halogen, in den Definitionen X, Y und Z in den allgemeinen Formeln sowie als Substituenten für eine Gruppe, steht für Fluor, Chlor, Brom und/oder lod, insbesondere Fluor, Chlor und/oder Brom und besonders bevorzugt im Falle von X, Y und Z für Fluor oder Chlor.

In den allgemeinen Formeln steht $R^1$ vorzugsweise für gegebenenfalls durch Fluor und/oder Chlor substituiertes Alkyl oder Alkoxy mit vorzugsweise 1 bis 6, insbesondere 1 bis 4 Kohlenstoffatomen.

Vorzugsweise steht in den allgemeinen Formeln $R^2$ für gegebenenfalls durch Fluor, Chlor oder Brom oder durch $C_1$-$C_4$-Alkoxy substituiertes Alkyl mit vorzugsweise 1 bis 6, insbesondere 1 bis 4 Kohlenstoffatomen, oder für Phenyl, welches durch Halogen (vorzugsweise Chlor) substituiert sein kann.

Vorzugsweise sind die Reste $R^1$ und $R^2$ unsubstituiert.

Y steht in den allgemeinen Formeln vorzugsweise für Wasserstoff.

Z steht in den allgemeinen Formeln vorzugsweise für Fluor.

Von den erfindungsgemäßen S-(Halogenalkyl)-dithiophosphor(phosphon)säureestern der Formel (I) sind diejenigen bevorzugt,

in welchen

$R^1$ für gegebenenfalls durch Halogen oder $C_1$-$C_4$-Alkoxy substituiertes $C_1$-$C_6$-Alkyl und $C_2$-$C_4$-Alkenyl; für gegebenenfalls durch Halogen und/oder $C_1$-$C_4$-Alkoxy substituiertes $C_1$-$C_6$-Alkoxy, $C_2$-$C_4$-Alkenyloxy und $C_2$-$C_4$-Alkinyloxy (vorzugsweise für gegebenenfalls durch Halogen substituiertes $C_1$-$C_4$-Alkyl oder $C_1$-$C_4$-Alkoxy) steht,

$R^2$ für gegebenenfalls durch Halogen und/oder $C_1$-$C_4$-Alkoxy substituiertes $C_1$-$C_6$-Alkyl; für gegebenenfalls durch $C_1$-$C_4$-Alkyl und/oder Halogen substituiertes Cycloalkyl mit 3 bis 8 Kohlenstoffatomen; für gegebenenfalls durch Halogen, Methyl und/oder Ethyl substituiertes $C_2$-$C_4$-Alkenyl und $C_2$-$C_4$-Alkinyl, für gegebenenfalls durch $C_1$-$C_4$-Alkyl, $C_1$-$C_4$-Alkoxy, $C_1$-$C_4$-Halogenalkyl mit 1 bis 9 Halogenatomen und/oder Halogen substituiertes Aryl mit 6 bis 10 Kohlenstoffatomen (vorzugsweise für gegebenenfalls durch Halogen substituiertes $C_1$-$C_6$-Alkyl oder Phenyl) steht und

X und Y gleich oder verschieden sind und unabhängig voneinander für Wasserstoff, Fluor, Chlor oder Brom (vorzugsweise Fluor oder Chlor) oder $C_1$-$C_{20}$-Alkyl (vorzugsweise für Wasserstoff) stehen und

Z für Wasserstoff, Fluor, Chlor oder $C_1$-$C_4$-Alkyl (vorzugsweise für Fluor) steht.

Besonders bevorzugt sind diejenigen S-(Halogenalkyl)-dithiophosphor(phosphon)säureester der Formel (I), in welchen

$R^1$ für gegebenenfalls durch Fluor, Chlor, Methoxy und/oder Ethoxy substituiertes $C_1$-$C_2$-Alkyl und $C_2$-$C_3$-Alkenyl; für gegebenenfalls durch Fluor, Chlor, Methoxy und/oder Ethoxy substituiertes $C_1$-$C_4$-Alkoxy, $C_2$-$C_3$-Alkenyloxy und $C_2$-$C_3$-Alkinyloxy (vorzugsweise für gegebenenfalls durch Halogen substituiertes $C_1$-$C_4$-Alkyl oder $C_1$-$C_4$-Alkoxy) steht,

$R^2$ für gegebenenfalls durch Fluor, Chlor, Brom, Methoxy und/oder Ethoxy substituiertes $C_1$-$C_4$-Alkyl, für gegebenenfalls durch Methyl, Ethyl, Fluor und/oder Chlor substituiertes Cycloalkyl mit 3 bis 6 Kohlenstoffatomen; für gegebenenfalls durch Fluor und/ oder Chlor substituiertes $C_2$-$C_4$-Alkenyl und $C_2$-$C_4$-Alkinyl; für gegebenenfalls durch $C_1$-$C_2$-Alkyl, $C_1$-$C_2$-Alkoxy, $C_1$-$C_2$-Halogenalkyl mit 1 bis 3 Halogenatomen und durch Fluor, Chlor und/oder Brom substituiertes Aryl mit 6 bis 10 Kohlenstoffatomen (vorzugsweise für gegebenenfalls durch Chlor substituiertes $C_1$-$C_4$-Alkyl oder Phenyl) steht und

X und Y gleich oder verschieden sind und unabhängig voneinander für Wasserstoff, Fluor, Chlor und Brom (vorzugsweise Fluor oder Chlor) oder $C_1$-$C_{18}$-Alkyl (vorzugsweise im Falle von X für Wasserstoff oder $C_1$-$C_6$-Alkyl und im Falle von Y für Wasserstoff) stehen und

Z für Wasserstoff, Fluor, Chlor oder $C_1$-$C_2$-Alkyl (vorzugsweise Fluor) steht.

Ganz besonders bevorzugt sind diejenigen S-(Halogenalkyl)-dithiophosphor(phosphon)säureester der Formel (I),

in welcher

$R^1$ für gegebenenfalls durch Fluor, Chlor und/oder Methoxy substituiertes ($C_1$-$C_4$)-Alkyl, $C_1$-$C_4$-Alkoxy oder ($C_2$-$C_3$)-Alkenyloxy (vorzugsweise für $C_1$-$C_4$-Alkyl oder $C_1$-$C_4$-Alkoxy) steht,

$R^2$ für gegebenenfalls durch Fluor, Chlor, Brom und/oder Methoxy substituiertes $C_1$-$C_4$-Alkyl, für Cycloalkyl mit 3 bis 6 Kohlenstoffatmen; für $C_2$-$C_4$-Alkenyl oder $C_2$-$C_4$-Alkinyl; für gegebenenfalls durch $C_1$-$C_2$-Alkyl, $C_1$-$C_2$-Alkoxy, $C_1$-$C_2$-Halogenalkyl mit 1 bis 3 Halogenatomen und durch Fluor, Chlor und/oder Brom substituiertes Phenyl (vorzugsweise für $C_1$-$C_4$-Alkyl) steht und

X und Y gleich oder verschieden sind und unabhängig voneinander für Wasserstoff, Fluor, Chlor oder ($C_1$-$C_{16}$)-Alkyl (vorzugsweise für Wasserstoff) steht und

Z für Wasserstoff, Fluor, Chlor oder Methyl (vorzugsweise für Fluor) steht.

Ganz besonders hervorgehoben werden diejenigen S-(Halogenalkyl)-dithiophosphor(phosphon)-säureester der Formel (I)

in welcher

$R^1$ für Methyl, Ethyl, Methoxy, Ethoxy, Propoxy oder Butoxy steht,

$R^2$ für Methyl, Ethyl, Propyl, für gegebenenfalls durch Methyl, Methoxy, Trifluormethyl, Fluor und Chlor substituiertes Phenyl steht und

X und Y gleich oder verschieden sind und unabhängig voneinander für Wasserstoff, Fluor, Chlor, Methyl, Ethyl, Propyl, Butyl oder Ethyl-pentyl stehen und

Z für Wasserstoff und Fluor steht.

Im einzelnen seien außer den bei den Herstellungsbeispielen genannten Verbindungen die folgenden S-(Halogenalkyl)-dithiophosphor(phosphon)säureester der allgemeinen Formel (I)

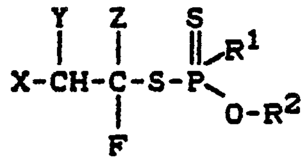

(I)

genannt:

**Tabelle 1:**

| X | Y | Z | $R^1$ | $R^2$ |
|---|---|---|---|---|
| H | H | H | $-OCH_3$ | $CH_3$ |
| H | H | H | $-OC_2H_5$ | $-C_3H_7$-i |
| H | H | H | $-OC_2H_5$ | $-C_4H_9$-i |
| H | H | H | $-OC_2H_5$ | $-C_4H_9$-S |
| H | H | H | $-CH_3$ | $-CH_3$ |
| H | H | H | $-CH_3$ | $-C_2H_5$ |
| H | H | H | $-C_2H_5$ | $-CH_3$ |
| H | H | H | $-C_2H_5$ | $-C_2H_5$ |
| H | H | F | $-C_2H_5$ | $-C_4H_9$-s |
| H | H | F | $-CH_3$ | $-CH_3$ |
| H | H | F | $-CH_3$ | $-C_2H_5$ |
| H | H | F | $-C_2H_5$ | $-CH_3$ |
| H | H | Cl | $-CH_3$ | $-CH_3$ |
| H | H | Cl | $-OC_2H_5$ | $-C_2H_5$ |
| H | H | Cl | $-OC_2H_5$ | $-C_3H_7$-i |
| H | H | Cl | $-OC_2H_5$ | $-C_4H_9$-i |
| H | H | Cl | $-OC_2H_5$ | $-C_4H_9$-s |
| H | H | Cl | $-CH_3$ | $-CH_3$ |
| H | H | Cl | $-CH_3$ | $-C_2H_5$ |
| H | H | Cl | $-C_2H_5$ | $-CH_3$ |
| H | H | Cl | $-C_2H_5$ | $-C_2H_5$ |

Tabelle 1: - Fortsetzung

| X | Y | Z | $R^1$ | $R^2$ |
|---|---|---|---|---|
| H | H | $-CH_3$ | $-CH_3$ | $-CH_3$ |
| H | H | $-CH_3$ | $-OC_2H_5$ | $-C_2H_5$ |
| H | H | $-CH_3$ | $-OC_2H_5$ | $-C_3H_7$-i |
| H | H | $-CH_3$ | $-OC_2H_5$ | $-C_4H_9$-i |
| H | H | $-CH_3$ | $-OC_2H_5$ | $-C_4H_9$-s |
| H | H | $-CH_3$ | $-CH_3$ | $-CH_3$ |
| H | H | $-CH_3$ | $-CH_3$ | $-C_2H_5$ |
| H | H | $-CH_3$ | $-C_2H_5$ | $-CH_3$ |
| H | H | $-CH_3$ | $-C_2H_5$ | $-C_2H_5$ |
| H | H | H | $-CH_3$ | $-CH_3$ |
| H | F | H | $-OC_2H_5$ | $-C_2H_5$ |
| H | F | H | $-OC_2H_5$ | $-C_3H_7$-i |
| H | F | H | $-OC_2H_5$ | $-C_4H_9$-i |
| H | F | H | $-OC_2H_5$ | $-C_4H_9$-s |
| H | F | H | $-CH_3$ | $-CH_3$ |
| H | F | H | $-CH_3$ | $-C_2H_5$ |
| H | F | H | $-C_2H_5$ | $-CH_3$ |
| H | F | H | $-C_2H_5$ | $-C_2H_5$ |
| H | F | F | $-CH_3$ | $-CH_3$ |
| H | F | F | $-OC_2H_5$ | $-C_3H_7$-i |

Tabelle 1: - Fortsetzung

| X | Y | Z | $R^1$ | $R^2$ |
|---|---|---|---|---|
| H | F | F | $-OC_2H_5$ | $-C_4H_9$-i |
| H | F | F | $-OC_2H_5$ | $-C_4H_9$-s |
| H | F | F | $-CH_3$ | $-CH_3$ |
| H | F | F | $-CH_3$ | $-C_2H_5$ |
| H | F | F | $-C_2H_5$ | $-CH_3$ |
| H | F | F | $-C_2H_5$ | $-C_2H_5$ |
| H | F | Cl | $-CH_3$ | $-CH_3$ |
| H | F | Cl | $-OC_2H_5$ | $-C_2H_5$ |
| H | F | Cl | $-OC_2H_5$ | $-C_3H_7$-i |
| H | F | Cl | $-OC_2H_5$ | $-C_4H_9$-i |
| H | F | Cl | $-OC_2H_5$ | $-C_4H_9$-s |
| H | F | Cl | $-CH_3$ | $-CH_3$ |
| H | F | Cl | $-CH_3$ | $-C_2H_5$ |
| H | F | Cl | $-C_2H_5$ | $-CH_3$ |
| H | F | Cl | $-C_2H_5$ | $-C_2H_5$ |
| H | F | $CH_3$ | $-CH_3$ | $-CH_3$ |
| H | F | $CH_3$ | $-OC_2H_5$ | $-C_2H_5$ |
| H | F | $CH_3$ | $-OC_2H_5$ | $-C_3H_7$-i |
| H | F | $CH_3$ | $-OC_2H_5$ | $-C_4H_9$-i |
| H | F | $CH_3$ | $-OC_2H_5$ | $-C_4H_9$-s |
| H | F | $CH_3$ | $-CH_3$ | $-CH_3$ |

Tabelle 1: - Fortsetzung

| X | Y | Z | $R^1$ | $R^2$ |
|---|---|---|---|---|
| H | F | $CH_3$ | $-CH_3$ | $-C_2H_5$ |
| H | F | $CH_3$ | $-C_2H_5$ | $-CH_3$ |
| H | F | $CH_3$ | $-C_2H_5$ | $-C_2H_5$ |
| H | Cl | H | $-CH_3$ | $-CH_3$ |
| H | Cl | H | $-OC_2H_5$ | $-C_3H_7$-i |
| H | Cl | H | $-OC_2H_5$ | $-C_4H_9$-i |
| H | Cl | H | $-OC_2H_5$ | $-C_4H_9$-s |
| H | Cl | H | $-CH_3$ | $-CH_3$ |
| H | Cl | H | $-CH_3$ | $-C_2H_5$ |
| H | Cl | H | $-C_2H_5$ | $-CH_3$ |
| H | Cl | H | $-C_2H_5$ | $-C_2H_5$ |
| H | Cl | F | $-CH_3$ | $-CH_3$ |
| H | Cl | F | $-OC_2H_5$ | $-C_2H_5$ |
| H | Cl | F | $-OC_2H_5$ | $-C_3H_7$-i |
| H | Cl | F | $-OC_2H_5$ | $-C_4H_9$-i |
| H | Cl | F | $-OC_2H_5$ | $-C_4H_9$-s |
| H | Cl | F | $-CH_3$ | $-CH_3$ |
| H | Cl | F | $-CH_3$ | $-C_2H_5$ |
| H | Cl | F | $-C_2H_5$ | $-CH_3$ |
| H | Cl | F | $-C_2H_5$ | $-C_2H_5$ |

Tabelle 1: - Fortsetzung

| X | Y | Z | $R^1$ | $R^2$ |
|---|---|---|---|---|
| H | Cl | Cl | $-CH_3$ | $-CH_3$ |
| H | Cl | Cl | $-OC_2H_5$ | $-C_2H_5$ |
| H | Cl | Cl | $-OC_2H_5$ | $-C_3H_7$-i |
| H | Cl | Cl | $-OC_2H_5$ | $-C_4H_9$-i |
| H | Cl | Cl | $-OC_2H_5$ | $-C_4H_9$-s |
| H | Cl | Cl | $-CH_3$ | $-CH_3$ |
| H | Cl | Cl | $-CH_3$ | $-C_2H_5$ |
| H | Cl | Cl | $-C_2H_5$ | $-CH_3$ |
| H | Cl | Cl | $-C_2H_5$ | $-C_2H_5$ |
| H | Cl | $CH_3$ | $-CH_3$ | $-CH_3$ |
| H | Cl | $CH_3$ | $-OC_2H_5$ | $-C_2H_5$ |
| H | Cl | $CH_3$ | $-OC_2H_5$ | $-C_3H_7$-i |
| H | Cl | $CH_3$ | $-OC_2H_5$ | $-C_4H_9$-i |
| H | Cl | $CH_3$ | $-OC_2H_5$ | $-C_4H_9$-s |
| H | Cl | $CH_3$ | $-CH_3$ | $-CH_3$ |
| H | Cl | $CH_3$ | $-CH_3$ | $-C_2H_5$ |
| H | Cl | $CH_3$ | $-C_2H_5$ | $-CH_3$ |
| H | Cl | $CH_3$ | $-C_2H_5$ | $-C_2H_5$ |
| H | $CH_3$ | H | $-CH_3$ | $-CH_3$ |
| H | $CH_3$ | H | $-OC_2H_5$ | $-C_2H_5$ |
| H | $CH_3$ | H | $-OC_2H_5$ | $-C_3H_7$-i |

Tabelle 1: - Fortsetzung

| X | Y | Z | $R^1$ | $R^2$ |
|---|---|---|---|---|
| H | $CH_3$ | H | $-OC_2H_5$ | $-C_4H_9$-i |
| H | $CH_3$ | H | $-OC_2H_5$ | $-C_4H_9$-s |
| H | $CH_3$ | H | $-CH_3$ | $-CH_3$ |
| H | $CH_3$ | H | $-CH_3$ | $-C_2H_5$ |
| H | $CH_3$ | H | $-C_2H_5$ | $-CH_3$ |
| H | $CH_3$ | H | $-C_2H_5$ | $-C_2H_5$ |
| H | $CH_3$ | F | $-CH_3$ | $-CH_3$ |
| H | $CH_3$ | F | $-OC_2H_5$ | $-C_2H_5$ |
| H | $CH_3$ | F | $-OC_2H_5$ | $-C_3H_7$-i |
| H | $CH_3$ | F | $-OC_2H_5$ | $-C_4H_9$-i |
| H | $CH_3$ | F | $-OC_2H_5$ | $-C_4H_9$-s |
| H | $CH_3$ | F | $-CH_3$ | $-CH_3$ |
| H | $CH_3$ | F | $-CH_3$ | $-C_2H_5$ |
| H | $CH_3$ | F | $-C_2H_5$ | $-CH_3$ |
| H | $CH_3$ | F | $-C_2H_5$ | $-C_2H_5$ |
| H | $CH_3$ | Cl | $-CH_3$ | $-CH_3$ |
| H | $CH_3$ | Cl | $-OC_2H_5$ | $-C_2H_5$ |
| H | $CH_3$ | Cl | $-OC_2H_5$ | $-C_3H_7$-i |
| H | $CH_3$ | Cl | $-OC_2H_5$ | $-C_4H_9$-i |
| H | $CH_3$ | Cl | $-OC_2H_5$ | $-C_4H_9$-s |
| H | $CH_3$ | Cl | $-CH_3$ | $-CH_3$ |

Tabelle 1: - Fortsetzung

| X | Y | Z | $R^1$ | $R^2$ |
|---|---|---|---|---|
| H | $CH_3$ | Cl | $-CH_3$ | $-C_2H_5$ |
| H | $CH_3$ | Cl | $-C_2H_5$ | $-CH_3$ |
| H | $CH_3$ | Cl | $-C_2H_5$ | $-C_2H_5$ |
| H | $CH_3$ | $CH_3$ | $-CH_3$ | $-CH_3$ |
| H | $CH_3$ | $CH_3$ | $-OC_2H_5$ | $-C_2H_5$ |
| H | $CH_3$ | $CH_3$ | $-OC_2H_5$ | $-C_3H_7$-i |
| H | $CH_3$ | $CH_3$ | $-OC_2H_5$ | $-C_4H_9$-i |
| H | $CH_3$ | $CH_3$ | $-OC_2H_5$ | $-C_4H_9$-s |
| H | $CH_3$ | $CH_3$ | $-CH_3$ | $-CH_3$ |
| H | $CH_3$ | $CH_3$ | $-CH_3$ | $-C_2H_5$ |
| H | $CH_3$ | $CH_3$ | $-C_2H_5$ | $-CH_3$ |
| H | $CH_3$ | $CH_3$ | $-C_2H_5$ | $-C_2H_5$ |
| F | F | H | $-CH_3$ | $-CH_3$ |
| F | F | H | $-OC_2H_5$ | $-C_2H_5$ |
| F | F | H | $-OC_2H_5$ | $-C_3H_7$-i |
| F | F | H | $-OC_2H_5$ | $-C_4H_9$-i |
| F | F | H | $-OC_2H_5$ | $-C_4H_9$-s |
| F | F | H | $-CH_3$ | $-CH_3$ |
| F | F | H | $-CH_3$ | $-C_2H_5$ |
| F | F | H | $-C_2H_5$ | $-CH_3$ |
| F | F | H | $-C_2H_5$ | $-C_2H_5$ |

Tabelle 1: - Fortsetzung

| X | Y | Z | $R^1$ | $R^2$ |
|---|---|---|---|---|
| F | F | F | $-CH_3$ | $-CH_3$ |
| F | F | F | $-OC_2H_5$ | $-C_2H_5$ |
| F | F | F | $-OC_2H_5$ | $-C_3H_7$-i |
| F | F | F | $-OC_2H_5$ | $-C_4H_9$-i |
| F | F | F | $-OC_2H_5$ | $-C_4H_9$-s |
| F | F | F | $-CH_3$ | $-CH_3$ |
| F | F | F | $-CH_3$ | $-C_2H_5$ |
| F | F | F | $-C_2H_5$ | $-CH_3$ |
| F | F | F | $-C_2H_5$ | $-C_2H_5$ |
| F | F | Cl | $-CH_3$ | $-CH_3$ |
| F | F | Cl | $-OC_2H_5$ | $-C_2H_5$ |
| F | F | Cl | $-OC_2H_5$ | $-C_3H_7$-i |
| F | F | Cl | $-OC_2H_5$ | $-C_4H_9$-i |
| F | F | Cl | $-OC_2H_5$ | $-C_4H_9$-s |
| F | F | Cl | $-CH_3$ | $-CH_3$ |
| F | F | Cl | $-CH_3$ | $-C_2H_5$ |
| F | F | Cl | $-C_2H_5$ | $-CH_3$ |
| F | F | Cl | $-C_2H_5$ | $-C_2H_5$ |
| F | F | $CH_3$ | $-CH_3$ | $-CH_3$ |
| F | F | $CH_3$ | $-OC_2H_5$ | $-C_2H_5$ |
| F | F | $CH_3$ | $-OC_2H_5$ | $-C_3H_7$-i |

Tabelle 1: - Fortsetzung

| X | Y | Z | $R^1$ | $R^2$ |
|---|---|---|---|---|
| F | F | $CH_3$ | $-OC_2H_5$ | $-C_4H_9$-i |
| F | F | $CH_3$ | $-OC_2H_5$ | $-C_4H_9$-s |
| F | F | $CH_3$ | $-CH_3$ | $-CH_3$ |
| F | F | $CH_3$ | $-CH_3$ | $-C_2H_5$ |
| F | F | $CH_3$ | $-C_2H_5$ | $-CH_3$ |
| F | F | $CH_3$ | $-C_2H_5$ | $-C_2H_5$ |
| F | Cl | H | $-CH_3$ | $-CH_3$ |
| F | Cl | H | $-OC_2H_5$ | $-C_2H_5$ |
| F | Cl | H | $-OC_2H_5$ | $-C_3H_7$-i |
| F | Cl | H | $-OC_2H_5$ | $-C_4H_9$-i |
| F | Cl | H | $-OC_2H_5$ | $-C_4H_9$-s |
| F | Cl | H | $-CH_3$ | $-CH_3$ |
| F | Cl | H | $-CH_3$ | $-C_2H_5$ |
| F | Cl | H | $-C_2H_5$ | $-CH_3$ |
| F | Cl | H | $-C_2H_5$ | $-C_2H_5$ |
| F | Cl | F | $-CH_3$ | $-CH_3$ |
| F | Cl | F | $-OC_2H_5$ | $-C_3H_7$-i |
| F | Cl | F | $-OC_2H_5$ | $-C_4H_9$-i |
| F | Cl | F | $-OC_2H_5$ | $-C_4H_9$-s |
| F | Cl | F | $-CH_3$ | $-CH_3$ |
| F | Cl | F | $-CH_3$ | $-C_2H_5$ |

Tabelle 1: - Fortsetzung

| X | Y | Z | $R^1$ | $R^2$ |
|---|---|---|---|---|
| F | Cl | F | $-C_2H_5$ | $-CH_3$ |
| F | Cl | F | $-C_2H_5$ | $-C_2H_5$ |
| F | Cl | Cl | $-CH_3$ | $-CH_3$ |
| F | Cl | Cl | $-OC_2H_5$ | $-C_2H_5$ |
| F | Cl | Cl | $-OC_2H_5$ | $-C_3H_7$-i |
| F | Cl | Cl | $-OC_2H_5$ | $-C_4H_9$-i |
| F | Cl | Cl | $-OC_2H_5$ | $-C_4H_9$-s |
| F | Cl | Cl | $-CH_3$ | $-CH_3$ |
| F | Cl | Cl | $-CH_3$ | $-C_2H_5$ |
| F | Cl | Cl | $-C_2H_5$ | $-CH_3$ |
| F | Cl | Cl | $-C_2H_5$ | $-C_2H_5$ |
| F | Cl | $CH_3$ | $-CH_3$ | $-CH_3$ |
| F | Cl | $CH_3$ | $-OC_2H_5$ | $-C_2H_5$ |
| F | Cl | $CH_3$ | $-OC_2H_5$ | $-C_3H_7$-i |
| F | Cl | $CH_3$ | $-OC_2H_5$ | $-C_4H_9$-i |
| F | Cl | $CH_3$ | $-OC_2H_5$ | $-C_4H_9$-s |
| F | Cl | $CH_3$ | $-CH_3$ | $-CH_3$ |
| F | Cl | $CH_3$ | $-CH_3$ | $-C_2H_5$ |
| F | Cl | $CH_3$ | $-C_2H_5$ | $-CH_3$ |
| F | Cl | $CH_3$ | $-C_2H_5$ | $-C_2H_5$ |

**Tabelle 1**: - Fortsetzung

| X | Y | Z | $R^1$ | $R^2$ |
|---|---|---|---|---|
| F | $CH_3$ | H | $-CH_3$ | $-CH_3$ |
| F | $CH_3$ | H | $-OC_2H_5$ | $-C_2H_5$ |
| F | $CH_3$ | H | $-OC_2H_5$ | $-C_3H_7$-i |
| F | $CH_3$ | H | $-OC_2H_5$ | $-C_4H_9$-i |
| F | $CH_3$ | H | $-OC_2H_5$ | $-C_4H_9$-s |
| F | $CH_3$ | H | $-CH_3$ | $-CH_3$ |
| F | $CH_3$ | H | $-CH_3$ | $-C_2H_5$ |
| F | $CH_3$ | H | $-C_2H_5$ | $-CH_3$ |
| F | $CH_3$ | H | $-C_2H_5$ | $-C_2H_5$ |
| F | $CH_3$ | F | $-CH_3$ | $-CH_3$ |
| F | $CH_3$ | F | $-OC_2H_5$ | $-C_2H_5$ |
| F | $CH_3$ | F | $-OC_2H_5$ | $-C_3H_7$-i |
| F | $CH_3$ | F | $-OC_2H_5$ | $-C_4H_9$-i |
| F | $CH_3$ | F | $-OC_2H_5$ | $-C_4H_9$-s |
| F | $CH_3$ | F | $-CH_3$ | $-CH_3$ |
| F | $CH_3$ | F | $-CH_3$ | $-C_2H_5$ |
| F | $CH_3$ | F | $-C_2H_5$ | $-CH_3$ |
| F | $CH_3$ | F | $-C_2H_5$ | $-C_2H_5$ |
| F | $CH_3$ | Cl | $-CH_3$ | $-CH_3$ |
| F | $CH_3$ | Cl | $-OC_2H_5$ | $-C_2H_5$ |
| F | $CH_3$ | Cl | $-OC_2H_5$ | $-C_3H_7$-i |
| F | $CH_3$ | Cl | $-OC_2H_5$ | $-C_4H_9$-i |

Tabelle 1: - Fortsetzung

| X | Y | Z | $R^1$ | $R^2$ |
|---|---|---|---|---|
| F | $CH_3$ | Cl | $-OC_2H_5$ | $-C_4H_9$-s |
| F | $CH_3$ | Cl | $-CH_3$ | $-CH_3$ |
| F | $CH_3$ | Cl | $-CH_3$ | $-C_2H_5$ |
| F | $CH_3$ | Cl | $-C_2H_5$ | $-CH_3$ |
| F | $CH_3$ | Cl | $-C_2H_5$ | $-C_2H_5$ |
| F | $CH_3$ | $CH_3$ | $-CH_3$ | $-CH_3$ |
| F | $CH_3$ | $CH_3$ | $-OC_2H_5$ | $-C_2H_5$ |
| F | $CH_3$ | $CH_3$ | $-OC_2H_5$ | $-C_3H_7$-i |
| F | $CH_3$ | $CH_3$ | $-OC_2H_5$ | $-C_4H_9$-i |
| F | $CH_3$ | $CH_3$ | $-OC_2H_5$ | $-C_4H_9$-s |
| F | $CH_3$ | $CH_3$ | $-CH_3$ | $-CH_3$ |
| F | $CH_3$ | $CH_3$ | $-CH_3$ | $-C_2H_5$ |
| F | $CH_3$ | $CH_3$ | $-C_2H_5$ | $-CH_3$ |
| F | $CH_3$ | $CH_3$ | $-C_2H_5$ | $-C_2H_5$ |
| Cl | Cl | H | $-CH_3$ | $-CH_3$ |
| Cl | Cl | H | $-OC_2H_5$ | $-C_2H_5$ |
| Cl | Cl | H | $-OC_2H_5$ | $-C_3H_7$-i |
| Cl | Cl | H | $-OC_2H_5$ | $-C_4H_9$-i |
| Cl | Cl | H | $-OC_2H_5$ | $-C_4H_9$-s |
| Cl | Cl | H | $-CH_3$ | $-CH_3$ |
| Cl | Cl | H | $-CH_3$ | $-C_2H_5$ |

<u>Tabelle 1</u>: - Fortsetzung

| X | Y | Z | $R^1$ | $R^2$ |
|---|---|---|---|---|
| Cl | Cl | H | $-C_2H_5$ | $-CH_3$ |
| Cl | Cl | H | $-C_2H_5$ | $-C_2H_5$ |
| Cl | Cl | F | $-CH_3$ | $-CH_3$ |
| Cl | Cl | F | $-OC_2H_5$ | $-C_2H_5$ |
| Cl | Cl | F | $-OC_2H_5$ | $-C_3H_7$-i |
| Cl | Cl | F | $-OC_2H_5$ | $-C_4H_9$-i |
| Cl | Cl | F | $-OC_2H_5$ | $-C_4H_9$-s |
| Cl | Cl | F | $-CH_3$ | $-CH_3$ |
| Cl | Cl | F | $-CH_3$ | $-C_2H_5$ |
| Cl | Cl | F | $-C_2H_5$ | $-CH_3$ |
| Cl | Cl | F | $-C_2H_5$ | $-C_2H_5$ |
| Cl | Cl | Cl | $-CH_3$ | $-CH_3$ |
| Cl | Cl | Cl | $-OC_2H_5$ | $-C_2H_5$ |
| Cl | Cl | Cl | $-OC_2H_5$ | $-C_3H_7$-i |
| Cl | Cl | Cl | $-OC_2H_5$ | $-C_4H_9$-i |
| Cl | Cl | Cl | $-OC_2H_5$ | $-C_4H_9$-s |
| Cl | Cl | Cl | $-CH_3$ | $-CH_3$ |
| Cl | Cl | Cl | $-CH_3$ | $-C_2H_5$ |
| Cl | Cl | Cl | $-C_2H_5$ | $-CH_3$ |
| Cl | Cl | Cl | $-C_2H_5$ | $-C_2H_5$ |

Tabelle 1: - Fortsetzung

| X | Y | Z | $R^1$ | $R^2$ |
|---|---|---|---|---|
| Cl | Cl | $CH_3$ | $-CH_3$ | $-CH_3$ |
| Cl | Cl | $CH_3$ | $-OC_2H_5$ | $-C_2H_5$ |
| Cl | Cl | $CH_3$ | $-OC_2H_5$ | $-C_3H_7$-i |
| Cl | Cl | $CH_3$ | $-OC_2H_5$ | $-C_4H_9$-i |
| Cl | Cl | $CH_3$ | $-OC_2H_5$ | $-C_4H_9$-s |
| Cl | Cl | $CH_3$ | $-CH_3$ | $-CH_3$ |
| Cl | Cl | $CH_3$ | $-CH_3$ | $-C_2H_5$ |
| Cl | Cl | $CH_3$ | $-C_2H_5$ | $-CH_3$ |
| Cl | Cl | $CH_3$ | $-C_2H_5$ | $-C_2H_5$ |
| Cl | $CH_3$ | H | $-CH_3$ | $-CH_3$ |
| Cl | $CH_3$ | H | $-OC_2H_5$ | $-C_2H_5$ |
| Cl | $CH_3$ | H | $-OC_2H_5$ | $-C_3H_7$-i |
| Cl | $CH_3$ | H | $-OC_2H_5$ | $-C_4H_9$-i |
| Cl | $CH_3$ | H | $-OC_2H_5$ | $-C_4H_9$-s |
| Cl | $CH_3$ | H | $-CH_3$ | $-CH_3$ |
| Cl | $CH_3$ | H | $-CH_3$ | $-C_2H_5$ |
| Cl | $CH_3$ | H | $-C_2H_5$ | $-CH_3$ |
| Cl | $CH_3$ | H | $-C_2H_5$ | $-C_2H_5$ |
| Cl | $CH_3$ | F | $-CH_3$ | $-CH_3$ |
| Cl | $CH_3$ | F | $-OC_2H_5$ | $-C_2H_5$ |
| Cl | $CH_3$ | F | $-OC_2H_5$ | $-C_3H_7$-i |

Tabelle 1: - Fortsetzung

| X | Y | Z | $R^1$ | $R^2$ |
|---|---|---|---|---|
| Cl | $CH_3$ | F | $-OC_2H_5$ | $-C_4H_9$-i |
| Cl | $CH_3$ | F | $-OC_2H_5$ | $-C_4H_9$-s |
| Cl | $CH_3$ | F | $-CH_3$ | $-CH_3$ |
| Cl | $CH_3$ | F | $-CH_3$ | $-C_2H_5$ |
| Cl | $CH_3$ | F | $-C_2H_5$ | $-CH_3$ |
| Cl | $CH_3$ | F | $-C_2H_5$ | $-C_2H_5$ |
| Cl | $CH_3$ | Cl | $-CH_3$ | $-CH_3$ |
| Cl | $CH_3$ | Cl | $-OC_2H_5$ | $-C_2H_5$ |
| Cl | $CH_3$ | Cl | $-OC_2H_5$ | $-C_3H_7$-i |
| Cl | $CH_3$ | Cl | $-OC_2H_5$ | $-C_4H_9$-i |
| Cl | $CH_3$ | Cl | $-OC_2H_5$ | $-C_4H_9$-s |
| Cl | $CH_3$ | Cl | $-CH_3$ | $-CH_3$ |
| Cl | $CH_3$ | Cl | $-CH_3$ | $-C_2H_5$ |
| Cl | $CH_3$ | Cl | $-C_2H_5$ | $-CH_3$ |
| Cl | $CH_3$ | Cl | $-C_2H_5$ | $-C_2H_5$ |
| Cl | $CH_3$ | $CH_3$ | $-CH_3$ | $-CH_3$ |
| Cl | $CH_3$ | $CH_3$ | $-OC_2H_5$ | $-C_2H_5$ |
| Cl | $CH_3$ | $CH_3$ | $-OC_2H_5$ | $-C_3H_7$-i |
| Cl | $CH_3$ | $CH_3$ | $-OC_2H_5$ | $-C_4H_9$-i |
| Cl | $CH_3$ | $CH_3$ | $-OC_2H_5$ | $-C_4H_9$-s |
| Cl | $CH_3$ | $CH_3$ | $-CH_3$ | $-CH_3$ |

Tabelle 1: - Fortsetzung

| X | Y | Z | $R^1$ | $R^2$ |
|---|---|---|---|---|
| Cl | $CH_3$ | $CH_3$ | $-CH_3$ | $-C_2H_5$ |
| Cl | $CH_3$ | $CH_3$ | $-C_2H_5$ | $-CH_3$ |
| Cl | $CH_3$ | $CH_3$ | $-C_2H_5$ | $-C_2H_5$ |
| $CH_3$ | $CH_3$ | H | $-CH_3$ | $-CH_3$ |
| $CH_3$ | $CH_3$ | H | $-OC_2H_5$ | $-C_2H_5$ |
| $CH_3$ | $CH_3$ | H | $-OC_2H_5$ | $-C_3H_7$-i |
| $CH_3$ | $CH_3$ | H | $-OC_2H_5$ | $-C_4H_9$-i |
| $CH_3$ | $CH_3$ | H | $-OC_2H_5$ | $-C_4H_9$-s |
| $CH_3$ | $CH_3$ | H | $-CH_3$ | $-CH_3$ |
| $CH_3$ | $CH_3$ | H | $-CH_3$ | $-C_2H_5$ |
| $CH_3$ | $CH_3$ | H | $-C_2H_5$ | $-CH_3$ |
| $CH_3$ | $CH_3$ | H | $-C_2H_5$ | $-C_2H_5$ |
| $CH_3$ | $CH_3$ | F | $-CH_3$ | $-CH_3$ |
| $CH_3$ | $CH_3$ | F | $-OC_2H_5$ | $-C_2H_5$ |
| $CH_3$ | $CH_3$ | F | $-OC_2H_5$ | $-C_3H_7$-i |
| $CH_3$ | $CH_3$ | F | $-OC_2H_5$ | $-C_4H_9$-i |
| $CH_3$ | $CH_3$ | F | $-OC_2H_5$ | $-C_4H_9$-s |
| $CH_3$ | $CH_3$ | F | $-CH_3$ | $-CH_3$ |
| $CH_3$ | $CH_3$ | F | $-CH_3$ | $-C_2H_5$ |
| $CH_3$ | $CH_3$ | F | $-C_2H_5$ | $-CH_3$ |
| $CH_3$ | $CH_3$ | F | $-C_2H_5$ | $-C_2H_5$ |

Tabelle 1: - Fortsetzung

| X | Y | Z | $R^1$ | $R^2$ |
|---|---|---|---|---|
| $CH_3$ | $CH_3$ | Cl | $-CH_3$ | $-CH_3$ |
| $CH_3$ | $CH_3$ | Cl | $-OC_2H_5$ | $-C_2H_5$ |
| $CH_3$ | $CH_3$ | Cl | $-OC_2H_5$ | $-C_3H_7$-i |
| $CH_3$ | $CH_3$ | Cl | $-OC_2H_5$ | $-C_4H_9$-i |
| $CH_3$ | $CH_3$ | Cl | $-OC_2H_5$ | $-C_4H_9$-s |
| $CH_3$ | $CH_3$ | Cl | $-CH_3$ | $-CH_3$ |
| $CH_3$ | $CH_3$ | Cl | $-CH_3$ | $-C_2H_5$ |
| $CH_3$ | $CH_3$ | Cl | $-C_2H_5$ | $-CH_3$ |
| $CH_3$ | $CH_3$ | Cl | $-C_2H_5$ | $-C_2H_5$ |
| $CH_3$ | $CH_3$ | $CH_3$ | $-CH_3$ | $-CH_3$ |
| $CH_3$ | $CH_3$ | $CH_3$ | $-OC_2H_5$ | $-C_2H_5$ |
| $CH_3$ | $CH_3$ | $CH_3$ | $-OC_2H_5$ | $-C_3H_7$-i |
| $CH_3$ | $CH_3$ | $CH_3$ | $-OC_2H_5$ | $-C_4H_9$-i |
| $CH_3$ | $CH_3$ | $CH_3$ | $-OC_2H_5$ | $-C_4H_9$-s |
| $CH_3$ | $CH_3$ | $CH_3$ | $-CH_3$ | $-CH_3$ |
| $CH_3$ | $CH_3$ | $CH_3$ | $-CH_3$ | $-C_2H_5$ |
| $CH_3$ | $CH_3$ | $CH_3$ | $-C_2H_5$ | $-CH_3$ |
| $CH_3$ | $CH_3$ | $CH_3$ | $-C_2H_5$ | $-C_2H_5$ |

Verwendet man als Ausgangsstoffe beispielsweise O,O-Diethyl-dithiophosphorsäure und Vinylidenfluorid, so kann der Reaktionsablauf des erfindungsgemäßen Verfahrens durch das folgende Formelschema wiedergegeben werden:

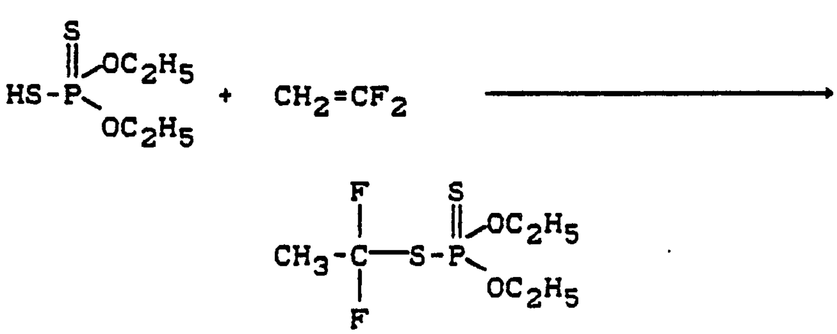

Die bei dem erfindungsgemäßen Verfahren als Ausgangsstoffe zu verwendenden Di-thiophosphor(phosphon)säuren sind durch die Formel (II) allgemein definiert. In dieser Formel (II) stehen $R^1$ und $R^2$ vorzugsweise bzw. besonders bevorzugt für diejenigen Reste, welche oben bei den Definitionen für Formel (I) angegeben sind.

Die Di-thiophosphor(phosphon)säuren der Formel (II) sind allgemein bekannte Verbindungen der organischen Chemie.

Die bei dem erfindungsgemäßen Verfharen außerdem als Ausgangsstoffe zu verwendenden Fluoralkene sind durch die Formel (III) allgemein definiert. In dieser Formel (III) stehen X, Y und Z vorzugsweise bzw. besonders bevorzugt für diejenigen Reste, welche oben bei der Definition für die Formel (I) angegeben sind.

Die Fluoralkene der Formel (III) sind allgemein bekannte Verbindungen der organischen Chemie und/oder können nach allgemein bekannten Verfahren erhalten werden.

Das erfindungsgemäße Verfahren zur Herstellung der neuen Verbindungen der Formel (I) wird gegebenenfalls unter Verwendung von Verdünnungsmitteln durchgeführt.

Hierzu gehören insbesondere aliphatische oder aromatische, gegebenenfalls halogenierte Kohlenwasserstoffe, wie beispielsweise Pentan, Hexan, Heptan, Cyclohexan, Petrolether, Benzin, Ligroin, Benzol, Toluol, Xylol, Methylenchlorid, Ethylenchlorid, Chloroform, Tetrachlorkohlenstoff, Chlorbenzol und o-Dichlorbenzol, Ether wie Dimethyl- und Dibutylether, Glykoldimethylether und Diglykoldimethylether, Tetrahydrofuran und Dioxan, Ketone wie Aceton, Methyl-ethyl-, Methyl-isopropyl- und Methyl-isobutyl-keton, Ester wie Essigsäuremethylester und -ethylester, Nitrile wie z.B. Acetonitril und Propionitril, Amide wie z.B. Dimethylformamid, Dimethylacetamid und N-Methyl-pyrrolidon sowie Dimethylsulfoxid, Tetramethylensulfon und Hexamethylphosphorsäuretriamid.

Die Reaktionstemperaturen können bei dem Verfahren zur Herstellung der Verbindungen der Formel (I) in einem größeren Bereich variiert werden. Im allgemeinen arbeitet man bei Temperaturen zwischen 0 °C und 200 °C, vorzugsweise bei Temperaturen zwischen 80 °C und 140 °C.

Die Umsetzung läßt man im allgemeinen bei erhöhtem Druck ablaufen. Zur Durchführung des erfindungsgemäßen Verfahrens setzt man die Reaktionsteilnehmer vorzugsweise im äquimolaren Verhältnis ein. Ein Überschuß der einen oder anderen Komponente bringt im allgemeinen keine wesentlichen Vorteile. Es kann jedoch vorteilhaft sein, die Verbindungen der Formel (III) im Überschuß (vorzugsweise 1,5 bis 4 Mol je Mol Ausgangsstoff der Formel (II), einzusetzen. Die Reaktion wird gegebenenfalls in einem der angegebenen Lösungsmittel durchgeführt. Die Aufarbeitung des Ansatzes erfolgt nach üblichen Methoden durch Waschen des Reaktionsgemisches mit verdünnten wäßrigen Basen, Abtrennen der organischen Phase und Abdestillieren des Lösungsmittels.

Die neuen Verbindungen fallen in Form von Ölen an, die sich teilweise nicht unzersetzt destillieren lassen, jedoch durch sogenanntes "Andestillieren", d.h. durch längeres Erhitzen unter vermindertem Druck auf mäßig erhöhte Temperatur von den letzten flüchtigen Anteilen befreit und auf diese Weise gereinigt werden können. Zu ihrer Charakterisierung dient der Retentionsindex (Kovats-Index).

Die Wirkstoffe eignen sich zur Bekämpfung von tierischen Schädlingen, vorzugsweise Arthropoden und Nematoden, insbesondere Insekten und Spinnentieren, die in der Landwirtschaft, in Forsten, im Vorrats- und Materialschutz sowie auf dem Hygienesektor vorkommen. Sie sind gegen normal sensible und resistente Arten sowie gegen alle oder einzelne Entwicklungsstadien wirksam. Zu den oben erwähnten Schädlingen gehören:

Aus der Ordnung der Isopoda z.B. Oniscus asellus, Armadillidium vulgare, Porcellio scaber.

Aus der Ordnung der Diplopoda z.B. Blaniulus guttulatus.

Aus der Ordnung der Chilopoda z.B. Geophilus carpophagus, Scutigera spec.

Aus der Ordnung der Symphyla z.B. Scutigerella immaculata.

Aus der Ordnung der Thysanura z.B. Lepisma saccharina.

Aus der Ordnung der Collembola z.B. Onychiurus armatus.

Aus der Ordnung der Orthoptera z.B. Blatta orientalis, Periplaneta americana, Leucophaea maderae, Blattella germanica, Acheta domesticus, Gryllotalpa spp., Locusta migratoria migratorioides, Melanoplus differentialis, Schistocerca gregaria.

Aus der Ordnung der Dermaptera z.B. Forficula auricularia.

Aus der Ordnung der Isoptera z.B. Reticulitermes spp..

Aus der Ordnung der Anoplura z.B. Phylloxera vastatrix, Pemphigus spp., Pediculus-humanus corporis, Haematopinus spp., Linognathus spp.

Aus der Ordnung der Mallophaga z.B. Trichodectes spp., Damalinea spp.

Aus der Ordnung der Thysanoptera z.B. Hercinothrips femoralis, Thrips tabaci.

Aus der Ordnung der Heteroptera z.B. Eurygaster spp., Dysdercus intermedius, Piesma quadrata, Cimex

lectularius, Rhodnius prolixus, Triatoma spp.
Aus der Ordnung der Homoptera z.B. Aleurodes brassicae, Bemisia tabaci, Trialeurodes vaporariorum, Aphis gossypii, Brevicoryne brassicae, Cryptomyzus ribis, Aphis fabae, Doralis pomi, Eriosoma lanigerum, Hyalopterus arundinis, Macrosiphum avenae, Myzus spp., Phorodon humuli, Rhopalosiphum padi, Empoasca spp., Euscelis bilobatus, Nephotettix cincticeps, Lecanium corni, Saissetia oleae, Laodelphax striatellus, Nilaparvata lugens, Aonidiella aurantii, Aspidiotus hederae, Pseudococcus spp. Psylla spp.
Aus der Ordnung der Lepidoptera z.B. Pectinophora gossypiella, Bupalus piniarius, Cheimatobia brumata, Lithocolletis blancardella, Hyponomeuta padella, Plutella maculipennis, Malacosoma neustria, Euproctis chrysorrhoea, Lymantria spp. Bucculatrix thurberiella, Phyllocnistis citrella, Agrotis spp., Euxoa spp., Feltia spp., Earias insulana, Heliothis spp., Spodoptera exigua, Mamestra brassicae, Panolis flammea, Prodenia litura, Spodoptera spp., Trichoplusia ni, Carpocapsa pomonella, Pieris spp., Chilo spp., Pyrausta nubilalis, Ephestia kuehniella, Galleria mellonella, Tineola bisselliella, Tinea pellionella, Hofmannophila pseudospretella, Cacoecia podana, Capua reticulana, Choristoneura fumiferana, Clysia ambiguella, Homona magnanima, Tortrix viridana.
Aus der Ordnung der Coleoptera z.B. Anobium punctatum, Rhizopertha dominica, Acanthoscelides obtectus, Acanthoscelides obtectus, Hylotrupes bajulus, Agelastica alni, Leptinotarsa decemlineata, Phaedon cochleariae, Diabrotica spp., Psylliodes chrysocephala, Epilachna varive stis, Atomaria spp., Oryzaephilus surinamensis, Antho nomus spp., Sitophilus spp., Otiorrhynchus sulcatus, Cosmopolites sordidus, Ceuthorrhynchus assimilis, Hypera postica, Dermestes spp., Trogoderma spp., Anthrenus spp., Attagenus spp., Lyctus spp., Meligethes aeneus, Ptinus spp., Niptus hololeucus, Gibbium psylloides, Tribolium spp., Tenebrio molitor, Agriotes spp., Cono derus spp., Melolontha melolontha, Amphimallon solsti tialis, Costelytra zealandica.
Aus der Ordnung der Hymenoptera z.B. Diprion spp., Hoplocampa app., Lasius spp., Monomorium pharaonis, Vespa spp.
Aus der Ordnung der Diptera z.B. Aedes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hyppobosca spp., Stomoxys spp., Oestrus spp., Hypoderma spp., Tabanus spp., Tannia spp., Bibio hortulanus, Oscinella frit, Phorbia spp., Pegomyia hyoscyami, Ceratitis capitata, Dacus oleae, Tipula paludosa.
Aus der Ordnung der Siphonaptera z.B. Xenopsylla cheopis, Ceratophyllus spp..
Aus der Ordnung der Arachnida z.B. Scorpio maurus, Latrodectus mactans.
Aus der Ordnung der Acarina z.B. Acarus sori, Argas spp., Ornithodoros spp., Dermanyssus gallinae, Eriophyes ribis, Phyllocoptruta oleivora, Boophilus spp., Rhipicephalus spp., Amblyomma spp., Hyalomma spp., Ixodes spp., Psoroptes spp., Chlorioptes spp., Sarcoptes spp., Tarsonemus spp., Bryobia praetiosa, Panonychus spp., Tetranychus spp..
Zu den pflanzenparasitären Nematoden gehören Pratylenchus spp., Radopholus similis, Ditylenchus dipsaci, Tylenchulus semipenetrans, Heterodera spp., Meloidogyne spp., Aphelenchoides spp., Longidorus spp., Xiphinema spp., Trichodorus spp..

Die erfindungsgemäßen Wirkstoffe der Formel (I) zeichnen sich durch eine hervorragende insektizide Wirksamkeit aus. Sie zeigen insbesondere beim Einsatz als Bodeninsektizide eine hervorragende Wirkung gegen Maden, wie z.B. Phorbia antiqua-Maden und Diabrotica-balteata-Larven.

Die erfindungsgemäßen Wirkstoffe zeichnen sich außerdem durch eine hervorragende insektizide Wirksamkeit, insbesondere bei der Bekämpfung von Coleoptera-Arten, wie z.B. Sitophilus granarius aus und können auch sehr gut zur Bekämpfung von Hygiene- und Vorratsschädlingen, wie zum Beispiele Aedes aegypti-Larven eingesetzt werden.

Einige der erfindungsgemäßen Wirkstoffe zeigen auch blattinsektizide Wirkung und fungizide Wirkung gegen Pyricularia oryzae an Reis.

Die Wirkstoffe können in Abhängigkeit von ihren jeweiligen physikalischen und/oder chemischen Eigenschaften in übliche Formulierungen übergeführt werden, wie Lösungen, Emulsionen, Suspensionen, Pulver, Schäume, Pasten, Granulate, Aerosole, Wirkstoff-imprägnierte Natur- und synthetische Stoffe, Feinstverkapselungen in polymeren Stoffen und in Hüllmassen für Saatgut, ferner in Formulierungen mit Brennsätzen, wie Räucherpatronen, -dosen, -spiralen u.ä., sowie ULV-Kalt- und Warmnebel-Formulierungen.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten oder chlorierte aliphatische Kohlenwasserstoffe, wie Chlorbenzole, Chlorethylene oder Methylenchlorid, aliphatische Kohlenwas serstoffe, wie Cyclohexan oder Paraffine, z.B. Erdölfraktionen, Alkohole, wie Butanol oder Glycol sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser; mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgase, wie Halogenkohlenwasserstoffe sowie Butan, Propan, Stickstoff und Kohlendioxid; als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen in Frage; z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel; als Emulgier und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylarylpolyglykol-Ether, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat, sowie natürliche Phospholipide, wie Kephaline und Lecithine, und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 %.

Die Wirkstoffe können in ihren handelsüblichen Formulierungen sowie in den aus diesen Formulierungen bereiteten Anwendungsformen in Mischung mit anderen Wirkstoffen, wie Insektiziden, Lockstoffen, Sterilantien, Akariziden, Nematiziden, Fungiziden, wachstumsregulierenden Stoffen oder Herbiziden vorliegen. Zu den Insektiziden zählen beispielsweise Phosphorsäureester, Carbamate, Carbonsäureester, chlorierte Kohlenwasserstoffe, Phenylharnstoffe, durch Mikroorganismen hergestellte Stoffe u.a..

Die Wirkstoffe können ferner in ihren handelsüblichen Formulierungen sowie in den aus diesen Formulierungen bereiteten Anwendungsformen in Mischung mit Synergisten vorliegen. Synergisten sind Verbindungen, durch die die Wirkung der Wirkstoffe gesteigert wird, ohne daß der zugesetzte Synergist selbst aktiv wirksam sein muß.

Der Wirkstoffgehalt der aus den handelsüblichen Formulierungen bereiteten Anwendungsformen kann in weiten Bereichen variieren. Die Wirkstoffkonzentration der Anwendungsformen kann von 0,0000001 bis zu 95 Gew.-% Wirkstoff, vorzugsweise zwischen 0,0001 und 1 Gew.-% liegen.

Die Anwendung geschieht in einer den Anwendungsformen angepaßten üblichen Weise.

Bei der Anwendung gegen Hygiene- und Vorratsschädlinge zeichnen sich die Wirkstoffe durch eine hervorragende Residualwirkung auf Holz und Ton sowie durch eine gute Alkalistabilität auf gekälkten Unterlagen aus.

Herstellungsbeispiele:

Beispiel 1:

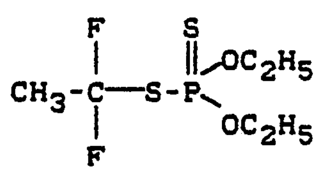

110 g (0,39 Mol) O,O-Diethyldithiophosphorsäure und 100 g (1,56 Mol) Vinylidenfluorid werden im

Autoklaven bei 80 bar 6,5 Stunden auf 110 °C erhitzt.
Das Reaktionsgemisch wird in Toluol aufgenommen, mit verdünnter Natronlauge gewaschen, die organische Phase abgetrennt, über Magnesiumsulfat getrocknet, das Toluol abgedampft und der Rückstand unter stark vermindertem Druck destilliert.
Man erhält 84,2 g (57 % der Theorie) O,O-Diethyl-S-(1,1-difluor-ethyl)-di-thiophosphorsäuretriester mit dem Siedepunkt 61 °C/0,15 mbar und mit dem Retentionsindex 1244*.

* Die Retentionsindices (Kovats-Index) wurden gaschromatographisch auf einer Siedepunktphase (Dimethylsilicon) ermittelt.

In analoger Weise zu Beispiel (1) und unter Berücksichtigung der Angaben in der Beschreibung zu dem erfindungsgemäßen Verfahren, werden die in der folgenden Tabelle 2 aufgeführten Endprodukte der Formel

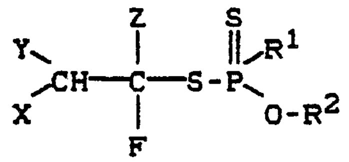

(I)

erhalten:

Tabelle 2

| Bsp. Nr. | X | Y | Z | $R^1$ | $R^2$ | Retentions-index* |
|---|---|---|---|---|---|---|
| 2 | H | H | F | $O-C_3H_7-i$ | $C_3H_7-i$ | 1314 |
| 3 | H | H | F | $C_2H_5$ | $C_4H_9-i$ | 1384 |
| 4 | $C_{14}H_{29}$ | H | F | $O-C_3H_7-i$ | $C_3H_7-i$ | |
| 5 | $CH-C_4H_9$<br>\|<br>$C_2H_5$ | H | F | $O-C_2H_5$ | $C_2H_5$ | 1846 |
| 6 | H | H | F | $O-C_2H_5$ | $C_4H_9-i$ | 1375 |
| 7 | H | H | F | $O-C_4H_9-i$ | $C_4H_9-i$ | 1499 |
| 8 | H | H | F | $C_2H_5$ | 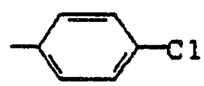 | 1861 |
| 9 | H | H | F | $O-C_2H_5$ | $C_3H_7-i$ | 1282 |
| 10 | H | H | F | $O-CH_3$ | $CH_3$ | 1133 |
| 11 | H | H | F | $C_2H_5$ | $C_2H_5$ | 1249 |
| 12 | H | H | H | $O-C_2H_5$ | $C_2H_5$ | 1289 |
| 13 | Cl | F | F | $O-C_2H_5$ | $C_2H_5$ | 1360 |
| 14 | H | Cl | H | $O-C_2H_5$ | $C_2H_5$ | |
| 15 | H | F | F | $O-C_2H_5$ | $C_2H_5$ | |

* Die Retentionsindices (Kovats-Index) wurden gaschromatographisch auf einer Siedepunktphase (Dimethylsilicon) ermittelt.

Verwendungsbeispiele

In den nachfolgenden Verwendungsbeispielen wurden die nachstehend angegebenen Verbindungen als Vergleichsverbindungen eingesetzt:

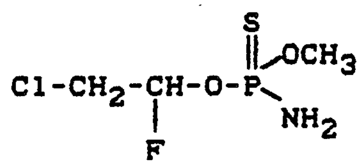 (A)

(bekannt aus DE-OS 26 29 016, die der US-PS 4 159 324 entspricht).

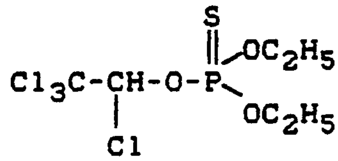 (B)

(bekannt aus EP-OS 0 160 344)

Beispiel A

Grenzkonzentrations-Test / Bodeninsekten

Testinsekt: Phorbia antiqua-Maden (im Boden)
Lösungsmittel: 3 Gewichtsteile Aceton
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit dem Boden vermischt. Dabei spielt die Konzentration des Wirkstoffes in der Zubereitung praktisch keine Rolle, entscheidend ist allein die Wirkstoffgewichtsmenge pro Volumeneinheit Boden, welche in ppm (= mg/l) angegeben wird. Man füllt den Boden in Töpfe und läßt diese bei Raumtemperatur stehen.

Nach 24 Stunden werden die Testtiere in den behandelten Boden gegeben und nach weiteren 2 bis 7 Tagen wird der Wirkungsgrad des Wirkstoffs durch Auszählen der toten und lebenden Testinsekten in % bestimmt. Der Wirkungsgrad ist 100 %, wenn alle Testinsekten abgetötet worden sind, er ist 0 %, wenn noch genau so viele Testinsekten leben wie bei der unbehandelten Kontrolle.

Bei diesem Test zeigten z.B. die Verbindungen der Herstellungsbeispiele 1, 2, 3, 5, 6, 7, 8, 9, 11 und 12 bei einer beispielhaften Konzentration von 20 ppm einen Wirkungsgrad von 100 %, während die Vergleichsverbindung A bei der gleichen Konzentration einen Wirkungsgrad von 0 % ergab.

Beispiel B

Grenzkonzentrations-Test / Bodeninsekten

Testinsekt: Diabrotica balteata-Larven (im Boden)
Lösungsmittel: 3 Gewichsteile Aceton
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration. Die Wirkstoffzubereitung wird innig mit dem Boden vermischt. Dabei spielt die Konzentration des Wirkstoffes in der Zubereitung praktisch keine Rolle, entscheidend ist allein die Wirkstoffgewichtsmenge pro Volumeneinheit Boden, welche in ppm (= mg/l) angegeben wird. Man füllt den Boden in Töpfe und läßt diese bei Raumtemperatur stehen.

Sofort nach dem Ansatz werden je Topf 6 vorgekeimte Maiskörner gelegt. Nach 2 Tagen werden in den

behandelten Boden die entsprechenden Testinsekten gesetzt. Nach weiteren 7 Tagen wird der Wirkungsgrad des Wirkstoffes durch Auszählen der toten und lebenden Testinsekten in % bestimmt. Der Wirkungsgrad ist 100 %, wenn alle Testinsekten abgetötet worden sind, er ist 0 %, wenn noch genau so viele Testinsekten leben wie bei der unbehandelten Kontrolle.

In diesem Test zeigte z.B. die Verbindung des Herstellungsbeispieles 1 bei einer beispielhaften Konzentration von 0,3 ppm einen Abtötungsgrad von 95 %, während die Vergleichsverbindung (B) bei der gleichen Konzentration keine Abtötung (0 %) ergab.

Beispiel C

Mückenlarven-Test

Testtiere: Aedes aegypti - Larven
Lösungsmittel: 99 Gewichsteile Aceton
Emulgator: 1 Gewichtsteil Benzylhydroxbiphenylpolyglykolether

Zur Herstellung einer zweckmäßigen Wirkstoffzubereitung löst man 2 Gew.-Teile Wirkstoff in 1000 Volumenteilen Lösungsmittel, das Emulgator in der oben angegebenen Menge enthält. Die so erhaltene Lösung wird mit Wasser auf die gewünschten geringeren Konzentrationen verdünnt.

Man füllt die wäßrigen Wirkstoffzubereitung der gewünschten Konzentration in Gläser und setzt anschließend etwa 25 Mückenlarven in jedes Glas ein.

Nach 24 Stunden wird der Abtötungsgrad in % bestimmt. Dabei bedeutet 100 %, daß alle Larven abgetötet worden sind. 0 % bedeutet, daß überhaupt keine Larven abgetötet worden sind.

Bei diesem Test zeigte z.B. die Verbindung des Herstellungsbeispiels 3 bei einer beispielhaften Konzentration von 0,1 ppm einen Abtötungsgrad von 100 %, während die Vergleichsverbindung (A) bei einer Konzentration von 1 ppm keine Abtötung (0 %) ergab.

Beispiel D

$LD_{100}$-Test

Testtiere: Sitophelia granarius
Lösungsmittel: Aceton

2 Gewichtsteile Wirkstoff werden in 1000 Volumenteilen Lösungsmittel aufgenommen. Die so erhaltene Lösung wird mit weiterem Lösungsmittel auf die gewünschten Konzentrationen verdünnt.

2,5 ml Wirkstofflösung werden in eine Petrischale pipettiert. Auf dem Boden der Petrischale befindet sich ein Filterpapier mit einem Durchmesser von etwa 9,5 cm. Die Petrischale bleibt so lange offen stehen, bis das Lösungsmittel vollständig verdunstet ist. Je nach Konzentration der Wirkstofflösung ist die Menge Wirkstoff pro $m^2$ Filterpapier verschieden hoch. Anschließend gibt man die angegebene Anzahl der Testtiere in die Petrischale und bedeckt sie mit einem Glasdeckel.

Der Zustand der Testtiere wird 3 Tage nach Ansetzen der Versuche kontrolliert. Bestimmt wird die Abtötung in %. Dabei bedeutet 100 %, daß alle Testtiere abgetötet wurden; 0 % bedeutet, daß keine Testtiere abgetötet wurden.

Bei diesem Test zeigte z.B. die Verbindung des Herstellungsbeispiels 3 bei einer beispielhaften Konzentration von 0,002 % Abtötungen von 100 %, während die Vergleichsverbindung (A) bei der gleichen Konzentration eine Abtötung von 30 % ergab.

**Ansprüche**

1. S-(Halogenalkyl)-dithiophosphor(phosphon)säureester der allgemeinen Formel

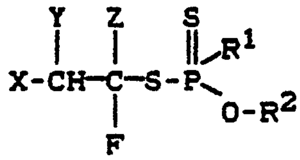

(I)

in welcher

$R^1$ für gegebenenfalls substituierte Reste aus der Reihe Alkyl, Alkenyl, Alkoxy, Alkenyloxy und Alkinyloxy steht,

$R^2$ für gegebenenfalls substituierte Reste aus der Reihe Alkyl, Cycloalkyl, Alkenyl, Alkinyl oder Aryl steht und

X und Y gleich oder verschieden sind und unabhängig voneinander für Wasserstoff, Halogen oder Alkyl stehen und

Z für Wasserstoff, Halogen oder Alkyl steht.

2. S-(Halogenalkyl)-dithiophosphor(phosphon)säureester der Formel (I) gemäß Anspruch 1

in welchen

$R^1$ für gegebenenfalls durch Halogen oder $C_1$-$C_4$-Alkoxy substituiertes $C_1$-$C_6$- Alkyl und $C_2$-$C_4$-Alkenyl; für gegebenenfalls durch Halogen und/oder $C_1$-$C_4$-Alkoxy substituiertes $C_1$-$C_6$-Alkoxy, $C_2$-$C_4$-Alkenyloxy und $C_2$-$C_4$-Alkinyloxy steht,

$R^2$ für gegebenenfalls durch Halogen und/oder $C_1$-$C_4$-Alkoxy substituiertes $C_1$-$C_6$-Alkyl; für gegebenenfalls durch $C_1$-$C_4$-Alkyl und/oder Halogen substituiertes Cycloalkyl mit 3 bis 8 Kohlenstoffatomen; für gegebenenfalls durch Halogen, Methyl und/oder Ethyl substituiertes $C_2$-$C_4$-Alkenyl und $C_2$-$C_4$-Alkinyl, für gegebenenfalls durch $C_1$-$C_4$-Alkyl, $C_1$-$C_4$-Alkoxy, $C_1$-$C_4$-Halogenalkyl mit 1 bis 9 Halogenatomen und/oder Halogen substituiertes Aryl mit 6 bis 10 Kohlenstoffatomen steht und

X und Y gleich oder verschieden sind und unabhängig voneinander für Wasserstoff, Fluor, Chlor oder Brom oder $C_1$-$C_{20}$-Alkyl stehen und

Z für Wasserstoff, Fluor, Chlor oder $C_1$-$C_4$-Alkyl steht.

3. S-(Halogenalkyl)-dithiophosphor(phosphon)säureester der Formel (I) gemäß Anspruch 1,

in welchen

$R^1$ für gegebenenfalls durch Fluor, Chlor, Methoxy und/oder Ethoxy substituiertes $C_1$-$C_2$- Alkyl und $C_2$-$C_3$-Alkenyl; für gegebenenfalls durch Fluor, Chlor, Methoxy und/oder Ethoxy substituiertes $C_1$-$C_4$-Alkoxy, $C_2$-$C_3$-Alkenyloxy und $C_2$-$C_3$-Alkinyloxy steht,

$R^2$ für gegebenenfalls durch Fluor, Chlor, Brom, Methoxy und/oder Ethoxy substituiertes $C_1$-$C_4$-Alkyl; für gegebenenfalls durch Methyl, Ethyl, Fluor und/oder Chlor substituiertes Cycloalkyl mit 3 bis 6 Kohlenstoffatomen; für gegebenenfalls durch Fluor und/ oder Chlor substituiertes $C_2$-$C_4$-Alkenyl und $C_2$-$C_4$-Alkinyl, für gegebenenfalls durch $C_1$-$C_2$-Alkyl, $C_1$-$C_2$-Alkoxy, $C_1$-$C_2$-Halogenalkyl mit 1 bis 3 Halogenatomen und durch Fluor, Chlor und/oder Brom substituiertes Aryl mit 6 bis 10 Kohlenstoffatomen steht und

X und Y gleich oder verschieden sind und unabhängig voneinander für Wasserstoff, Fluor, Chlor oder Brom oder $C_1$-$C_{18}$-Alkyl stehen und

Z für Wasserstoff, Fluor, Chlor oder $C_1$-$C_2$-Alkyl steht.

4. Verbindungen der Formel (I) gemäß Anspruch 1,

in welchen

X und Y für Wasserstoff stehen.

5. Verbindungen der Formel (I) gemäß Anspruch 1,

in welchen

Z für Fluor steht.

6. Verfahren zur Herstellung von S-(Halogenalkyl)-dithiophosphor(phosphon)säureester der allgemeinen Formel

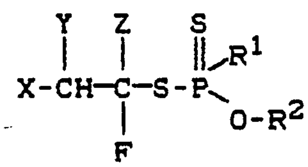

(I)

in welcher

$R^1$ für gegebenenfalls substituierte Reste aus der Reihe Alkyl, Alkenyl, Alkoxy, Alkenyloxy und Alkinyloxy steht,
$R^2$ für gegebenenfalls substituierte Reste aus der Reihe Alkyl, Cycloalkyl, Alkenyl, Alkinyl oder Aryl steht und
X und Y gleich oder verschieden sind und unabvonhängig einander für Wasserstoff, Halogen oder Alkyl stehen und
Z für Wasserstoff, Halogen oder Alkyl steht,
dadurch gekennzeichnet, daß man Dithiophosphor(phosphon)säuren der Formel

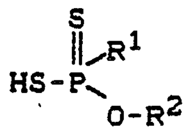

(II)

in welcher
$R^1$ und $R^2$ die oben angegebene Bedeutung haben,
mit Fluoralkenen der Formel

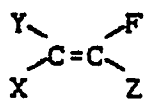

(III)

in welcher
X, Y und Z die oben angegebene Bedeutung haben,
gegebenenfalls in Gegenwart eines Verdünnungsmittels umsetzt.

7. Schädlingsbekämpfungsmittel, gekennzeichnet durch einen Gehalt an mindestens einer Verbindung der Formel (I) gemäß Anspruch 1 oder 6.

8. Verwendung von Verbindungen der Formel (I) gemäß Anspruch 1 oder 6 zur Bekämpfung von Schädlingen, insbesondere von Insekten und Nematoden.

9. Verfahren zur Bekämpfung von Schädlingen, dadurch gekennzeichnet, daß man Verbindungen der Formel (I) gemäß Anspruch 1 oder 6 auf Schädlinge, vorzugsweise Insekten und Nematoden oder ihren Lebensraum einwirken läßt.

10. Verfahren zur Herstellung von Schädlingsbekämpfungsmitteln, dadurch gekennzeichnet, daß man Verbindungen der Formel (I) gemäß Anspruch 1 oder 6 mit Streckmitteln und/oder oberflächenaktiven Mitteln vermischt.

Europäisches Patentamt

# EUROPÄISCHER RECHERCHENBERICHT

Nummer der Anmeldung

EP 89 11 3510

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-A-2 630 561 (BAYER)<br>* Ansprüche 1,5 * | 1,7 | C 07 F 9/165<br>C 07 F 9/40<br>A 01 N 57/04 |
| A | DE-A-2 532 628 (BAYER)<br>* Ansprüche 1,3 * | 1,7 | |
| A | EP-A-0 270 832 (NIHON TOKUSHO NOYAKU SEIZO K.K.)<br>* Ansprüche 1,3 * | 1,7 | |
| A | CHEMICAL ABSTRACTS<br>Band 86, Nr. 23, 6. Juni 1977, Seite 499, Spalte 2, Zusammenfassung Nr. 170831q, Columbus, Ohio, USA; I.L. KNUNYANTS et al.: "Addition of carboxylic and thiolic acids to perfluoroisobutylene"; & Izv. Akad. Nauk SSSR, Ser. Khim 1977, Band 1, Seiten 231-234 | 1 | |
| A,D | DE-A-2 629 016 (BAYER)<br>* Ansprüche 1,3 * | 1,7 | |

RECHERCHIERTE SACHGEBIETE (Int. Cl.5)

C 07 F 9/165
C 07 F 9/17
C 07 F 9/173
C 07 F 9/40
A 01 N 57/04

Der vorliegende Recherchenbericht wurde für alle Patentansprüche erstellt

| Recherchenort | Abschlußdatum der Recherche | Prüfer |
|---|---|---|
| BERLIN | 25-10-1989 | KAPTEYN H G |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)